# EUROPÄISCHE PATENTSCHRIFT

(11) **EP 0 753 698 B1**
(45) Veröffentlichungstag und Bekanntmachung des Hinweises auf die Patenterteilung: **30.08.2000**
(21) Anmeldenummer: 96109827.4
(22) Anmeldetag: 19.06.1996
(51) Int. Cl.: F16L 37/092

(54) **Steckverbindung zum Anschluss von Druckmittelleitungen**
Plug connector for connecting pressure conduits
Raccord pour conduites sous pression

(30) Priorität: 08.07.1995 DE 19524934
(43) Veröffentlichungstag der Anmeldung: 15.01.1997
(73) Patentinhaber: Armaturenfabrik Hermann Voss GmbH + Co., 51688 Wipperfürth (DE)
(72) Erfinder: Hefele, Reinhard, Dr. Ing., 51515 Kürten (DE)
(74) Vertreter: Patentanwälte Dr. Solf & Zapf

(56) Entgegenhaltungen:
- EP-A- 0 003 746
- EP-A- 0 226 689
- EP-A- 0 247 214
- EP-A- 0 330 350
- EP-A- 0 468 629
- GB-A- 2 217 417
- US-A- 2 730 116
- US-A- 3 584 900
- US-A- 4 462 622
- US-A- 4 471 978
- US-A- 5 380 049

## Beschreibung

Die vorliegende Erfindung betrifft eine Steckverbindung zum Anschluß von Druckmittelleitungen, bestehend aus einem Gehäuseteil mit einer eine einseitige Öffnung aufweisenden Aufnahme zum Einstecken eines insbesondere von einem Rohrleitungsende gebildeten Steckabschnittes, wobei innerhalb der Aufnahme auf der der Öffnung zugekehrten Seite mindestens ein Halteelement und von dem Halteelement ausgehend in Richtung von der Öffnung weg mindestens ein Dichtungselement angeordnet ist, und beim Einsteckvorgang des Steckabschnittes in die Aufnahme des Gehäuseteils zuerst eine Haltefunktion und im weiteren Verlauf des Einsteckvorganges zusätzlich über das Dichtungselement eine Abdichtung des Steckabschnittes gegenüber dem Gehäuseteil gewährleistet ist, wobei das Gehäuseteil einen Leckagepfad derart aufweist, daß in einer durch das Halteelement arretierten, jedoch noch nicht über das Dichtungselement abgedichteten Einsteckstellung des Steckabschnittes eine definiert begrenzte, wahrnehmbare Undichtigkeit gewährleistet ist.

Eine derartige Steckverbindung für Rohrleitungen ist bereits aus der EP 0 003 746 A1 bekannt. Diese Steckverbindung besteht im wesentlichen aus einem zweiteiligen Gehäuseteil und einer mit dem Gehäuseteil zusammenwirkenden Spannzange. Dabei setzt sich das Gehäuseteil aus einem Gehäusestutzen und einem Überwurfteil zusammen, die miteinander lösbar verbunden sind. Das Überwurfteil weist eine sich in Herausziehrichtung verengende Innenkonusfläche auf, die mit einer daran angepaßten Außenkonusfläche der Spannzange derart zusammenwirkt, daß im montierten bzw. gesteckten Zustand der Steckverbindung im Bereich der Spannzange eine Haltefunktion und in fortlaufender Einsteckrichtung im Bereich des Gehäusestutzens eine Dichtfunktion erreicht wird. Bei derartigen Ausführungen von Steckverbindungen ist es jedoch nachteilig, daß ein Einsteckzustand auftreten kann, in dem nach dem Prinzip "Halten vor Dichten" die Rohrleitung zwar gehalten, aber noch nicht abgedichtet ist, ohne daß dieser Zustand sofort bemerkt wird. Ein solcher Einsteckzustand, in dem die Funktion des Druckmittelsystems zunächst noch zumindest teilweise aufrechterhalten ist, kann insbesondere bei Bremssystemen oder dergleichen nachteilige Folgen haben. Das Druckmittel kann so nach und nach unbemerkt austreten, bis plötzlich keine Funktion - hier keine Bremsfunktion - mehr vorhanden ist.

Weitere Steckverbindungen, die nach diesem Prinzip "Halten vor Dichten" arbeiten, sind auch in den Dokumenten EP-A-0 226 689, US-A-5,380,049, US-A-4,462,622, GB-A-2 217 417 sowie US-A-3,584,900 und mit Einschränkungen auch US-A-2,730,116 jeweils beschrieben.

Bei den bekannten Steckverbindungen dieser Art ist nachteilig, daß unter ungünstigen Betriebsbedingungen, vor allem in Anwendungsbereichen, in denen sie starken Verschmutzungen von außen ausgesetzt sind (beispielsweise im Kfz-Bereich), Schmutzpartikel und dergleichen in die Steckverbindung eindringen und dort die Funktion insbesondere des Halteelementes und/oder des Dichtungselementes beeinträchtigen könnten, was natürlich zu einem Sicherheitsverlust führen würde.

Der vorliegenden Erfindung liegt die Aufgabe zugrunde, eine Steckverbindung zu schaffen, die mit einfachsten Mitteln im Falle einer nicht erreichten Einsteck-Endstellung der Steckverbindung die Sicherheit dieser Steckverbindung deutlich erhöht.

Erfindungsgemäß wird dies dadurch erreicht, daß dem Leckagepfad ein Ventilelement derart zugeordnet ist, daß in der noch nicht über das Dichtungselement abgedichteten Einsteckstellung des Steckabschnittes einerseits Druckmittel über den Leckagepfad nach außen treten kann, andererseits aber ein Eindringen von Schmutzpartikeln und dergleichen von außen in das Gehäuseinnere ausgeschlossen ist.

Durch die Erfindung wird somit einem Eindringen von Schmutz und dergleichen wirksam entgegengewirkt, so daß die Betriebssicherheit erhöht wird. Dennoch kann ein nicht korrektes Einstecken sicher bemerkt werden, weil das Ventilelement ein wahrnehmbares Entweichen von Druckmittel zuläßt.

In einer ersten Ausführungsform der Erfindung ist zur Signalisierung, daß der abgedichtete Einsteckendzustand noch nicht erreicht ist, insbesondere zwischen dem Dichtungselement und dem Halteelement innerhalb der Seitenwandung des Gehäuseteils eine als Bohrung ausgeführte Durchgangsöffnung angeordnet. Diese Durchgangsöffnung stellt in dieser Ausführungsform den Leckagepfad der Steckverbindung dar, wodurch im noch nicht abgedichteten Zustand der Steckverbindung eine definiert begrenzte, vornehmlich optisch oder akustisch wahrnehmbare Undichtigkeit gewährleistet ist. Dabei ist der Leckagepfad über ein Ventilelement mit dichtender und/oder filternder Wirkung derart abgedichtet, daß zwar aus dem Inneren des Gehäuseteils Druckmittel nach außen treten kann, jedoch von außen keine Schmutzpartikel oder dergleichen ins Gehäuseinnere dringen können.

Dieses Ventilelement ist vorzugsweise als eine Art Rückschlagventil ausgebildet, welches insbesondere eine Lamelle aufweist, die einerseits das Eindringen von Schmutz in das Gehäuseinnere verhindert und andererseits ab einem bestimmten Innendruck im Gehäuse ein akustisches Signal insbesondere in Form eines Pfeiftons erzeugt. Diese Erzeugung eines akustischen Signals erfolgt im wesentlichen analog zu der bei einer Mundharmonika, wo ebenfalls Lamellen durch einen bestimmten Druck in Schwingung versetzt werden und so ein akustisches Signal erzeugt wird.

Alternativ oder aber zusätzlich dazu kann auch eine als Ventilelement fungierende Schutzabdichtung vorgesehen sein.

Ein bevorzugter Anwendungsbereich der erfindungsgemäßen Steckverbindung sind beispielsweise druckluftbetätigte Bremsanlagen für LKW. Hierbei erzeugt die wahrnehmbare Undichtigkeit innerhalb der Steckverbindung bei nicht abgedichtetem, jedoch arretiertem Steckzustand somit ein Geräusch, vorzugsweise in Form eines Zisch- oder Pfeiftons.

Weitere vorteilhafte Ausgestaltungsmerkmale der Erfindung sind in den Unteransprüchen und in der folgenden Figurenbeschreibung enthalten. Es zeigen:
- Fig. 1: eine mögliche Ausführungsform einer erfindungsgemäßen Steckverbindung mit eingestecktem Rohrleitungsende im Halbschnitt,
- Fig. 2: eine Detaildarstellung gemäß Fig. 1 einer weiteren Ausführungsform der erfindungsgemäßen Steckverbindung und
- Fig. 3a und b: eine hinsichtlich Fig. 1 und 2 stark vergrößerte Detaildarstellung der erfindungsgemäßen Steckverbindung im Bereich des Leckagepfades.

In den Figuren der Zeichnung sind gleiche und sich funktionell entsprechende Teile mit denselben Bezugsziffern versehen.

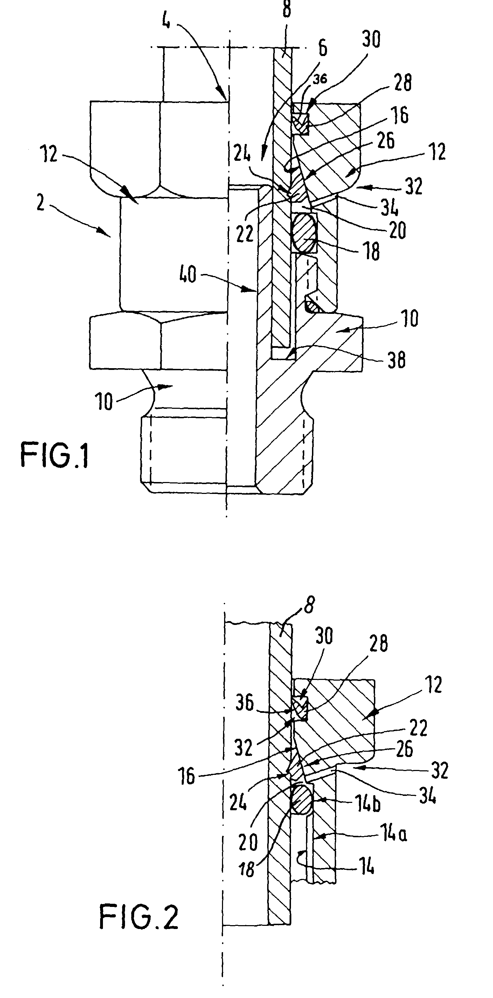

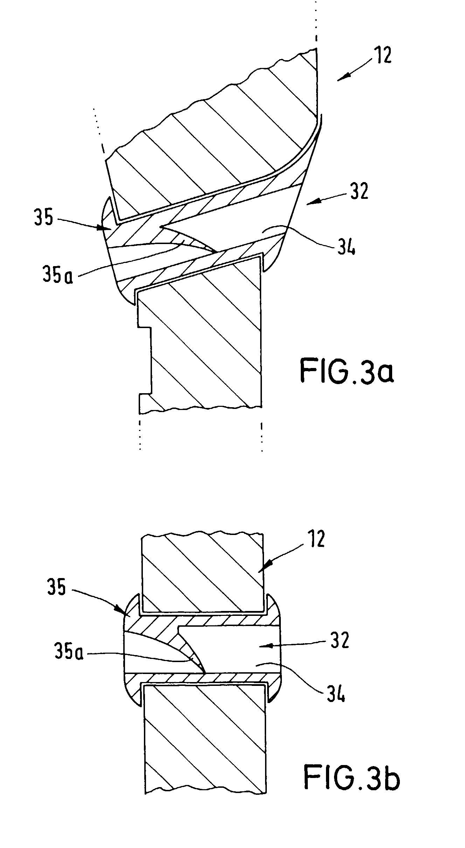

Die Fig. 1 zeigt eine erste mögliche Ausführungsform einer erfindungsgemäßen Steckverbindung zum Anschluß von Druckmittelleitungen, die im wesentlichen aus einem Gehäuseteil 2 mit einer eine einseitige Öffnung 4 aufweisenden Aufnahme 6 zum Einstecken eines insbesondere von einem Rohrleitungsende 8 gebildeten Steckabschnittes besteht. In der dargestellten Ausführungsform ist das Gehäuseteil 2 vorzugsweise zweiteilig ausgeführt und besteht aus einem Gehäusestutzen 10 und einem Überwurfteil 12. Dabei ist das Überwurfteil 12 kraft- und/oder formschlüssig, insbesondere über eine Schraubverbindung mit dem Gehäusestutzen 10 verbindbar. Das Überfwurfteil 12 ist ringförmig ausgeführt, wobei sich die Innenfläche des Überwurfteils 12 in eine zylindrische, dem Gehäuseteil 2 zugekehrte Innenfläche 14 und eine sich in Herausziehrichtung konisch verengende Innenfläche 16 aufteilt. Dabei ist die zylindrische Innenfläche 14 nochmals in einen dem Gehäuseteil 2 zugekehrten Verbindungsbereich 14a und einen sich an diesen in Richtung der konisch verengten Innenfläche 16 anschließenden Lagerbereich 14b für die Aufnahme eines Dichtungselementes 18 aufgeteilt. Weiterhin ist in einem von der konisch verengten Innenfläche 16 sowie der zylindrischen Innenfläche 14 und der Oberfläche des Rohrleitungsendes 8 begrenzten Ringraum 20 vorzugsweise im Bereich der sich konisch verengenden Innenfläche 16 ein Halteelement 22 angeordnet, das der insbesondere kraft- und/oder formschlüssigen Halterung des eingesteckten Rohrleitungsendes 8 in der Aufnahme 6 des Gehäuseteils 2 dient. Dieses Halteelement 22 ist insbesondere als geschlitztes Ringelement ausgeführt, welches auf seiner Innenfläche vorzugsweise eine Schneidkante 24 aufweist und auf seiner äußeren Ringfläche 26 insbesondere konisch geformt ist. Dabei wirkt die konisch geformte Ringfläche 26 des Halteelementes 22 mit der konisch verengten Innenfläche 16 des Überwurfteils 12 derart zusammen, daß eine kraft- und/oder formschlüssige Halterung des Rohrleitungsendes 8 im Gehäuseteil 2 gewährleistet ist. Des weiteren ist vorteilhafterweise im Bereich der Öffnung 4 des Überwurfteils 12 eine Schmutzdichtung 28 vorzugsweise in einer Aufnahmenut 30 des Überwurfteils 12 gelagert. Erfindungsgemäß ist insbesondere in dem Bereich des Überwurfteils 12, der sich in Herausziehrichtung oberhalb des Dichtungselementes 18 erstreckt, ein Leckagepfad 32 angeordnet, der eine Verbindung des inneren Ringraumes 20 nach außen darstellt und somit im arretierten, nicht abgedichteten Zustand eines eingesteckten Rohrleitungsendes 8 in das Gehäuseteil 2 eine definierte Undichtigkeit gewährleistet. In einer bevorzugten Ausführung der Erfindung ist dieser Leckagepfad 32 als Duchgangsöffnung 34, vorzugsweise als Bohrung, ausgeführt, und insbesondere in einem Bereich der Wandung des Überwurfteiles 12 bzw. des Gehäuseteils 2 zwischen dem Halteelement 22 und dem Dichtungselement 18 angeordnet. Wie in den Fig. 3a und b dargestellt, ist der Durchgangsöffnung 34 vorzugsweise ein Ventilelement 35 derart zugeordnet, daß Druckmittel vom Gehäuseinneren nach außen treten kann, jedoch Schmutzpartikel und dergleichen von außen nicht ins Gehäuseinnere dringen können. Mit Vorteil weist das Ventilelement 35 eine lamellenartige Dichtlippe 35a auf, die derart ausgebildet ist, daß durch sie ab einem bestimmten Innendruck ein akustisches Signal erzeugt wird (Prinzip: Mundharmonika-Lamelle). Mit Vorteil ist das Ventilelement 35 als Einpreßteil aus Kunststoff ausgeführt.

Die in Fig. 2 gezeigte Detaildarstellung gemäß Fig. 1 zeigt eine weitere mögliche Ausführungsform der erfindungsgemäßen Steckverbindung, wobei der Leckagepfad 32 durch eine spezielle Ausführung der Schmutzdichtung 28 realisiert ist. Die Schmutzdichtung 28 ist dabei im Einsteckzustand gesehen vorzugsweise in Herausziehrichtung derart elastisch ausgelegt, daß ab einem bestimmten Druck innerhalb der Steckverbindung Druckmittel über einen so zwischen der Schmutzdichtung 28 und der Oberfläche des Rohrleitungsendes 8 gebildeten Leckagepfad 32 nach außen treten kann. Vorzugsweise weist die Schmutzdichtung 28 dafür eine radial nach innen, schräg entgegen der Einsteckrichtung weisende Dichtlippe 36 auf, welche derart elastisch ausgeführt ist, daß sie ab einem bestimmten Druck eine definierte, begrenzte, wahrnehmbare Undichtigkeit, und somit eine Druckmittelströmung in Herausziehrichtung an der Schmutzdichtung 28 vorbei nach außen gewährleistet.

Die Aufnahme 6 des Gehäuseteils 2 ist mit Vorteil als Stufenbohrung ausgeführt, wobei durch den Übergang vom größerem Durchmesser zum kleineren Durchmesser der Stufenbohrung eine Anschlagstufe 38 für die Einsteckendstellung des Rohrleitungsendes 8 gebildet ist. Um eine bessere Stabilität, und damit eine erhöhte Sicherheit der Steckverbindung zu erreichen, ist das Gehäuseteil 2 im Bereich seiner Aufnahme 6 mit einer Stützhülse 40 versehen. Dabei erstreckt sich die Stützhülse 40 innerhalb der Aufnahme 6 des Gehäuseteils 2, ausgehend von der Anschlagstufe 38, in Herausziehrichtung im wesentlichen parallel zur Innenfläche eines in die Aufnahme 6 eingesteckten Rohrleitungsendes 8, wodurch dieses im eingesteckten Zustand von innen abgestützt wird.

## Patentansprüche

1. Steckverbindung zum Anschluß von Druckmittelleitungen, bestehend aus einem Gehäuseteil (2) mit einer eine einseitige Öffnung (4) aufweisenden Aufnahme (6) zum Einstecken eines insbesondere von einem Rohrleitungsende (8) gebildeten Steckabschnittes, wobei innerhalb der Aufnahme (6) auf der der Öffnung (4) zugekehrten Seite mindestens ein Halteelement (22) und von dem Halteelement (22) ausgehend in Richtung von der Öffnung (4) weg mindestens ein Dichtungselement (18) angeordnet ist, und beim Einsteckvorgang des Steckabschnittes in die Aufnahme (6) des Gehäuseteils (2) zuerst eine Haltefunktion und im weiteren Verlauf des Einsteckvorganges zusätzlich über das Dichtungselement (18) eine Abdichtung des Steckabschnittes gegenüber dem Gehäuseteil (2) gewährleistet ist, wobei das Gehäuseteil (2) einen Leckagepfad (32) derart aufweist, daß in einer durch das Halteelement (22) arretierten, jedoch noch nicht über das Dichtungselement (18) abgedichteten Einsteckstellung des Steckabschnittes eine definiert begrenzte, wahrnehmbare Undichtigkeit gewährleistet ist,
**dadurch gekennzeichnet**, daß dem Leckagepfad (32) ein Ventilelement (35,35a; 28,36) derart zugeordnet ist, daß in der noch nicht über das Dichtungselement (18) abgedichteten Einsteckstellung des Steckabschnittes einerseits Druckmittel über den Leckagepfad (32) nach außen treten kann, andererseits aber ein Eindringen von Schmutzpartikeln und dergleichen von außen in das Gehäuseinnere ausgeschlossen ist.

2. Steckverbindung nach Anspruch 1,
**dadurch gekennzeichnet,** daß der Leckagepfad (32) durch mindestens eine in dem Wandungsbereich zwischen der Öffnung (4) und dem Dichtungselement (18) angeordnete Durchgangsöffnung (34) des Gehäuseteils (2) gebildet ist.

3. Steckverbindung nach Anspruch 2
**dadurch gekennzeichnet,** daß die Durchgangsöffnung (34) in einem Wandungsbereich zwischen Dichtungselement (18) und Halteelement (22) angeordnet ist.

4. Steckverbindung nach Anspruch 2 oder 3,
**dadurch gekennzeichnet,** daß das Ventilelement (35) in der Durchgangsöffnung (34) angeordnet ist.

5. Steckverbindung nach einem der Ansprüche 1 bis 4,
**dadurch gekennzeichnet,** daß das Ventilelement (35) eine lamellenartige Dichtlippe (35a) aufweist, die derart ausgebildet ist, daß durch sie ab einem bestimmten Innendruck ein akustisches Signal erzeugt wird.

6. Steckverbindung nach einem der Ansprüche 1 bis 5,
**dadurch gekennzeichnet**, daß die Aufnahme (6) im Bereich ihrer Öffnung (4) eine dem Halteelement (22) und dem Dichtungselement (18) in Einsteckrichtung gesehen vorgelagerte Schmutzdichtung (28) aufweist.

7. Steckverbindung nach Anspruch 6,
**dadurch gekennzeichnet**, daß das Ventilelement von der Schmutzdichtung (28) gebildet ist, wobei die Schmutzdichtung (28) bei eingestecktem Rohrleitungsende (8) in das Gehäuseteil (2) entgegen der Einsteckrichtung derart elastisch ausgelegt ist, daß ab einem bestimmten Druck der Leckagepfad (32) zwischen Schmutzdichtung (28) und der Oberfläche des Rohrleitungsendes (8) gebildet ist.

8. Steckverbindung nach Anspruch 7,
**dadurch gekennzeichnet**, daß die Schmutzdichtung (28) eine radial nach innen, schräg entgegen der Einsteckrichtung weisende Dichtlippe (36) aufweist, die derart elastisch ist, daß sie ab einem bestimmten Druck Druckmittel nach außen treten läßt.

9. Steckverbindung nach einem der Ansprüche 1 bis 8,
**dadurch gekennzeichnet,** daß die Aufnahme (6) als Stufenbohrung ausgebildet ist, wobei durch den Übergang vom größeren Durchmesser zum kleineren Durchmesser der Stufenbohrung eine Anschlagstufe (38) für die Einsteck-Endstellung des Rohrleitungsendes (8) gebildet ist.

10. Steckverbindung nach einem der Ansprüche 1 bis 9,
**dadurch gekennzeichnet,** daß das Gehäuseteil (2) im Bereich seiner Aufnahme (6) eine Stützhülse (40) aufweist, die sich von der Anschlagstufe (38) der Stufenbohrung in Richtung Aufnahmeöffnung (4) erstreckt und das Rohrleitungsende (8) im eingesteckten Zustand von innen abstützt.

11. Steckverbindung nach einem der Ansprüche 1 bis 10,
**dadurch gekennzeichnet,** daß das Gehäuseteil (2) zweiteilig ausgeführt ist und aus einem Gehäusestutzen (10) und einem Überwurfteil (12) besteht.

12. Steckverbindung nach Anspruch 11,
**dadurch gekennzeichnet,** daß das Überwurfteil (12) und der Gehäusestutzen (10) kraft- und /oder formschlüssig, insbesondere über eine Schraubverbindung, miteinander verbunden sind.

13. Steckverbindung nach einem der Ansprüche 1 bis 12,
**dadurch gekennzeichnet**, daß das Halteelement (22) als umfänglich offener, in radialer Richtung geschlitzter Ring ausgeführt ist und auf der inneren Ringfläche eine Schneidkante (24) aufweist und auf der äußeren Ringfläche (26) konisch geformt ist.

14. Steckverbindung nach einem der Ansprüche 1 bis 13,
**dadurch gekennzeichnet,** daß das Gehäuseteil (2) eine sich in Herausziehrichtung konisch verengende Innenfläche (16) aufweist, die im Einsteckzustand mit der äußeren Ringfläche (26) des Halteelementes (22) zur kraft- und/oder formschlüssigen Halterung des Rohrleitungsendes (8) zusammenwirkt.

## Claims

1. Plug-in connection for the connection of pressure medium pipes, consisting of a housing part (2) with a socket (6) having an opening (4) on one side for the insertion of a plug-in portion formed in particular by a pipe end (8), wherein at least one retaining element (22) and at least one sealing element (18) which extends out from the retaining element (22) in the direction of the opening (4) are disposed within the socket (6) on the side facing the opening (4), and during the operating of inserting the plug-in portion into the socket (6) of the housing part (2) first of all a retaining function is ensured and additionally in the further course of the insertion operation a sealing of the plug-in portion relative to the housing portion (2) is ensured by way of the sealing element (18), the housing part (2) having a leakage path (32) in such a way that in an inserted position of the plug-in element (18), in which the latter is locked by the retaining element (22) but not yet sealed by way of the sealing element (18), a perceptible lack of sealing is ensured within defined limits, characterised in that a valve element (35, 35a; 28, 36) is associated with the leakage path (32) in such a way that, in the inserted position of the plug-in portion in which the latter is not yet sealed by way of the sealing element (18), on the one hand pressure medium can escape by way of the leakage path (32), but on the other hand penetration of particles of dirt and the like from the exterior into the interior of the housing is excluded.

2. Plug-in connection according to Claim 1, characterised in that the leakage path (32) is formed by at least one passage (34) in the housing part (2), this passage being disposed in the wall region between the opening (4) and the sealing element (18).

3. Plug-in connection according to Claim 2, characterised in that the passage (34) is disposed in a wall region between the sealing element (18) and the retaining element (22).

4. Plug connection according to Claim 2 or 3, characterised in that the valve element (35) is disposed in the passage (34).

5. Plug-in connection according to one of Claims 1 to 4, characterised in that the valve element (35) has a fin-like sealing lip (35a) which is constructed in such a way that beyond a certain internal pressure it produces an acoustic signal.

6. Plug-in connection according to one of Claims 1 to 5, characterised in that the socket (6) has in the region of its opening (4) a dirt seal (28) which is fixed in front of the retaining element (22) and the sealing element (18) when viewed in the direction of insertion.

7. Plug-in connection according to Claim 6, characterised in that the valve element is formed by the dirt seal (28), the dirt seal (28) being designed so that when the pipe end (8) is inserted into the housing part (2) the dirt seal is resilient against the direction of insertion in such a way that beyond a certain pressure the leakage path (32) is formed between the dirt seal (28) and the surface of the pipe end (8).

8. Plug-in connection according to Claim 7, characterised in that the dirt seal (28) has a sealing lip (36) which is directed radially inwards and obliquely against the direction of insertion, and which is resilient in such a way that beyond a certain pressure it allows pressure medium to escape.

9. Plug-in connection according one of Claims 1 to 8, characterised in that the socket (6) is constructed as a stepped bore, a stop step (38) for the end position of the insertion of the pipe end (8) being formed by the transition from the larger diameter to the smaller diameter of the stepped bore.

10. Plug-in connection according to one of Claims 1 to 9, characterised in that the housing part (2) has in the region of its socket (6) a supporting bush (40) which extends from the stop step (38) of the stepped bore in the direction of the socket opening (4) and supports the pipe end (8) from the interior in the inserted state.

11. Plug-in connection according to one of Claims 1 to 10, characterised in that the housing part (2) is constructed in two parts and consists of a housing stub (10) and a locking part (12).

12. Plug-in connection according to Claim 11, characterised in that the locking part (12) and the housing stub (10) are connected to one another frictionally and/or positively, particularly by way of a screw connection.

13. Plug-in connection according to one of Claims 1 to 12, characterised in that the retaining element (22) is constructed as a circumferentially open ring slotted in the radial direction, has a cutting edge (24) on the inner ring surface and is shaped conically on the outer ring surface (26).

14. Plug-in connection according to one of Claims 1 to 13, characterised in that the housing part (2) has an inner surface (16) which tapers conically in the direction of withdrawal and which in the inserted state co-operates with the outer ring surface (76) of the retaining element (22) for the frictional and/or positive retention of the pipe end (8).

## Revendications

1. Raccord à emboîtement pour le raccordement de tuyaux pour fluides sous pression, comprenant une partie boîtier (2) avec un logement (6) présentant une ouverture unilatérale (4) permettant d'enfoncer un tronçon emboîtable, formé d'une extrémité de tuyau (8) en particulier, au moins un élément de maintien (22) étant situé à l'intérieur du logement (6), du côté tourné vers l'ouverture (4), et au moins un élément d'étanchéité (18) étant situé à partir de l'élément de maintien (22) dans la direction opposée à l'ouverture (4), une fonction de maintien étant d'abord assurée lors de l'enfoncement du tronçon emboîtable dans le logement (6) de la partie boîtier (2) et, en poursuivant l'enfoncement, une étanchéité du tronçon emboîtable par rapport à la partie boîtier (2) étant en outre assurée grâce à l'élément d'étanchéité (18), la partie boîtier (2) présentant une voie de fuite (32) de sorte que, dans une position d'enfoncement du tronçon emboîtable arrêtée par l'élément de maintien (22), mais pas encore rendue étanche par l'élément d'étanchéité (18), un défaut d'étanchéité perceptible, limitée de manière définie, est assuré, caractérisé en ce que la voie de fuite (32)est munie d'un élément de soupape (35, 35a; 28, 36) de sorte que, dans la position d'enfoncement du tronçon emboîtable pas encore rendue étanche par l'élément d'étanchéité (18), du fluide sous pression peut s'échapper à l'extérieur par la voie de fuite (32), d'une part, et la pénétration à l'intérieur du boîtier de particules de poussières et autres venant de l'extérieur est exclue, d'autre part.

2. Raccord à emboîtement selon la revendication 1, caractérisé en ce que la voie de fuite (32) est formée par au moins un passage (34) de la partie boîtier (2) situé dans la zone de paroi comprise entre l'ouverture (4) et l'élément d'étanchéité (18).

3. Raccord à emboîtement selon la revendication 2,
caractérisé en ce que le passage (34) est situé dans une zone de paroi comprise entre élément d'étanchéité (18) et élément de maintien (22).

4. Raccord à emboîtement selon la revendication 2 ou 3,
caractérisé en ce que l'élément de soupape (35) est située dans le passage (34).

5. Raccord à emboîtement selon l'une des revendications 1 à 4,
caractérisé en ce que l'élément de soupape (35) présente une lèvre d'étanchéité (35a) lamellaire conçue de telle manière qu'elle provoque un signal sonore à partir d'une certaine pression intérieure.

6. Raccord à emboîtement selon l'une des revendications 1 à 5,
caractérisé en ce que le logement (6) présente, dans la zone de son ouverture (4), une garniture d'étanchéité aux poussières (28) située en amont de l'élément de maintien (22) et de l'élément d'étanchéité (18) quand on regarde dans le sens de l'emboîtement.

7. Raccord à emboîtement selon la revendication 6,
caractérisé en ce que l'élément de soupape est formé par une garniture d'étanchéité aux poussières (28), celle-ci étant conçue de manière élastique dans la direction inverse de celle de l'emboîtement lorsque l'extrémité du tuyau (8) est enfoncée dans la partie boîtier (2), de telle manière que la voie de fuite (32) se forme à partir d'une certaine pression entre la garniture d'étanchéité aux poussières (28) et la surface de l'extrémité du tuyau (8).

8. Raccord à emboîtement selon la revendication 7,
caractérisé en ce que la garniture d'étanchéité aux poussières (28) présente une lèvre d'étanchéité (36) orientée dans le sens radial vers l'intérieur, à l'oblique par rapport à la direction d'emboîtement, ladite lèvre étant élastique de sorte qu'elle laisse s'échapper vers l'extérieur du fluide sous pression à partir d'une certaine pression.

9. Raccord à emboîtement selon l'une des revendications 1 à 8,
caractérisé en ce que le logement (6) est conçu comme un alésage étagé, le passage du diamètre le plus grand au diamètre le plus petit de l'alésage étagé formant un butoir (38) pour la position finale d'emboîtement de l'extrémité du tuyau (8).

10. Raccord à emboîtement selon l'une des revendications 1 à 9,
caractérisé en ce que la partie boîtier (2) présente, dans la zone de son logement (6), une douille-support (40) qui s'étend à partir du butoir (38) de l'alésage étagé en direction de l'ouverture du logement (4) et soutient de l'intérieur l'extrémité du tuyau (8) lorsque celle-ci est emboîtée.

11. Raccord à emboîtement selon l'une des revendications 1 à 10,
caractérisé en ce que la partie boîtier (2) est réalisée en deux parties constituées par une tubulure (10) et une partie collerette (12).

12. Raccord à emboîtement selon la revendication 11,
caractérisé en ce que la partie collerette (12) et la tubulure (10) sont reliées entre elles de façon solidaire par une liaison dynamique et/ou avec correspondance de forme, par l'intermédiaire d'un assemblage vissé en particulier.

13. Raccord à emboîtement selon l'une des revendications 1 à 12,
caractérisé en ce que l'élément de maintien (22) est réalisé sous la forme d'une bague ouverte sur sa périphérie, fendue dans le sens radial, qu'il présente sur la face interne de la bague une arête coupante (24) et qu'il a une forme conique sur la face externe de la bague (26).

14. Raccord à emboîtement selon l'une des revendications 1 à 13,
caractérisé en ce que la partie boîtier (2) présente une face interne (16) se rétrécissant en forme de cône dans le sens de l'extraction, ladite face interne concourant, lorsque le tuyau est enfoncé, avec la face externe de la bague (26) de l'élément de maintien (22) pour maintenir l'extrémité du tuyau (8) de manière solidaire par une liaison dynamique et/ou avec correspondance de forme.
